# EUROPÄISCHE PATENTSCHRIFT

(11) **EP 2 338 725 B1**
(45) Veröffentlichungstag und Bekanntmachung des Hinweises auf die Patenterteilung: **17.09.2014**
(21) Anmeldenummer: 10015620.7
(22) Anmeldetag: 14.12.2010
(51) Int. Cl.: B60N 2/16, B60N 2/18, B60N 2/44

(54) **Verstell- und Arretiervorrichtung**
Adjustment and locking device
Dispositif de réglage et d'arrêt

(30) Priorität: 17.12.2009 DE 102009058923
(43) Veröffentlichungstag der Anmeldung: 29.06.2011
(73) Patentinhaber: Johnson Controls GmbH, 51399 Burscheid (DE)
(72) Erfinder: Haida, Stefan, 42855 Remscheid (DE); Dmitrij, Gerdt, 50670 Köln (DE)
(74) Vertreter: Schwöbel, Thilo K.

(56) Entgegenhaltungen:
- DE-A1-102007 017 617
- DE-A1-102008 052 892

## Beschreibung

Die vorliegende Erfindung betrifft eine Verstell- und Arretiervorrichtung für einen Fahrzeugsitz, insbesondere einen Kraftfahrzeugsitz, sowie einen Fahrzeugsitz mit einer solchen Verstell- und Arretiervorrichtung. Die Verstell- und Arretiervorrichtung dient zur Verstellung und zur Arretierung der Höhen- und/oder Neigungsverstellung einer Sitzteilstruktur und/oder einer mit der Sitzteilstruktur verbundenen Rückenlehnenstruktur.

Üblicherweise sind höhen- und/oder neigungsverstellbare Fahrzeugsitze mittels wenigstens eines Lenkers verstellbar, wobei der Lenker zur Durchführung der Höhen- und/oder Neigungsverstellung relativ zu einem Sitzunterbau und/oder relativ zur Sitzteilstruktur beispielsweise schwenkbar vorgesehen ist. Solche Fahrzeugsitze sind an sich allgemein bekannt, beispielsweise aus der Offenlegungsschrift DE 10 2007 017 617 A1, in der eine Verstellvorrichtung, insbesondere für einen Fahrzeugsitz, mit einem Planetengetriebe offenbart wird.

Eine gattungsgemäße Verstell- und Arretiervorrichtung ist im Dokument DE-102008052892 A offenbart.

Solche bekannten Fahrzeugsitze weisen den Nachteil auf, dass eine Vielzahl von Teilen vorgesehen sein muss, um den unterschiedlichen Betriebsbedingungen und insbesondere den damit verbundenen Festigkeitsanforderungen zu genügen, was mit erheblichem Aufwand, Gewicht, Bauraumanforderungen sowie den damit verbundenen Kosten bei der Herstellung und der Montage sowie auch im Betrieb (etwa durch einen erhöhten Kraftstoffverbrauch) verbunden ist.

Aufgabe der vorliegenden Erfindung ist es daher, einen Kraftfahrzeugsitz mit einer Sitzhöhenverstellmöglichkeit und/oder mit einer Sitzneigungsverstellmöglichkeit anzugeben, die in der Lage ist, die Sitzhöhenverstellung und/oder die Sitzneigungsverstellung mit einfachen Mitteln sowohl zu verstellen als auch zu blockieren bzw. zu arretieren.

Die Aufgabe wird gelöst durch eine Verstell- und Arretiervorrichtung nach Anspruch 1 bzw. durch einen Fahrzeugsitz mit einer erfindungsgemäßen Verstell- und Arretiervorrichtung nach Anspruch 5.

Erfindungsgemäß ist die Arretiereinrichtung in ihrem ersten Einstellzustand arretiert und zur Aufnahme von unfallbedingten Kräften vorgesehen, wobei die Arretiereinrichtung in ihrem zweiten Einstellzustand, in der eine Verstellung der Verstelleinrichtung möglich ist, entriegelt vorgesehen ist, wobei die Arretiereinrichtung einen Bremsring und ein in dem zweiten Einstellzustand relativ zum Bremsring um eine Drehachse drehbares erstes Drehelement aufweist, wobei die Arretiereinrichtung ein Entriegelungselement aufweist, wobei beim Übergang vom ersten Einstellzustand zum zweiten Einstellzustand eine Bewegung des Entriegelungselements relativ zur Drehachse im Wesentlichen radial nach außen vorgesehen ist, alternativ jedoch auch derart vorgesehen sein kann, dass sie im Wesentlichen radial nach innen oder im wesentlichen axial vorgesehen ist. Erfindungsgemäß ist es ferner vorgesehen, dass die Arretiereinrichtung ein Betätigungselement aufweist, wobei beim Übergang von der ersten Betriebssituation zur zweiten Betriebssituation eine Bewegung des Betätigungselements relativ zur Drehachse im wesentlichen axial vorgesehen ist. Insgesamt ist es hierdurch erfindungsgemäß vorteilhaft möglich, dass die Verstelleinrichtung besonders kompakt ausgeführt werden kann und somit einen geringen Bauraumbedarf hat, geringe Kosten verursacht und ein geringeres Gewicht aufweist. Ausführungsbeispiele der Erfindung sind in den Zeichnungen dargestellt und in der nachfolgenden Beschreibung näher erläutert.

Erfindungsgemäß ist es bevorzugt, dass das Entriegelungselement und das Betätigungselement zum Zusammenwirken mittels einer Schrägfläche vorgesehen sind.

Hierdurch ist es erfindungsgemäß in einfacher Weise möglich, durch eine axiale Verschiebung des Betätigungselements eine Entriegelung der Arretiereinrichtung (d.h. die Überführung in die zweite Betriebssituation der Verstell- und Arretiervorrichtung) durch Verschiebung des Entriegelungselements zu bewirken. Ferner ist es erfindungsgemäß für den bevorzugten Fall von mehreren Entriegelungselementen möglich, dass durch die Verwendung einer Schrägfläche zum Zusammenwirken zwischen dem Betätigungselement einerseits und der Mehrzahl von Entriegelungselementen andererseits eine einfache und robuste Betätigung der Verstell- und Arretiervorrichtung zwischen dem ersten Betriebsmodus und dem zweiten Betriebsmodus möglich ist.

Weiterhin ist es erfindungsgemäß vorgesehen, dass die Arretiereinrichtung mittels eines Aktuators motorisch von der ersten Betriebssituation in die zweite Betriebssituation bringbar ist. Hierdurch ist es in vorteilhafter Weise möglich, dass eine Entkopplung zwischen der Entriegelung der Verstell- und Arretiervorrichtung einerseits und der Verstellung der Verstell- und Arretiervorrichtung andererseits in besonders einfacher Weise realisierbar ist.

Es ist es weiterhin erfindungsgemäß bevorzugt, dass die Verstell- und Arretiervorrichtung wenigstens ein Bremselement aufweist, wobei in der ersten Betriebssituation das Bremselement zur Blockierung einer Drehung zwischen dem Bremsring und dem ersten Drehelement vorgesehen sind, wobei beim Übergang von der ersten Betriebssituation zur zweiten Betriebssituation eine direkte oder indirekte Übertragung der Bewegung des Entriegelungselements auf das Bremselement vorgesehen ist.

Hierdurch ist erfindungsgemäß eine besonders effektive Steuerung des Übergangs zwischen der ersten und zweiten Betriebssituation und insbesondere auch eine robuste Ausführung der Verstell- und Arretiervorrichtung möglich.

Es ist erfindungsgemäß ist es ferner auch bevorzugt, dass die Übertragung der Bewegung des Entriegelungselements auf das Bremselement direkt vorgesehen ist oder mittels eines Übertragungselements vorgesehen ist.

Die vorliegende Erfindung bezieht sich ebenfalls auf einen Fahrzeugsitz mit einer erfindungsgemäßen Verstell- und Arretiervorrichtung, wobei der Fahrzeugsitz durch Verstellen der Verstell- und Arretiervorrichtung höhen- und oder neigungseinstellbar vorgesehen ist.

### Kurze Beschreibung der Figuren

Figur 1 zeigt in zwei unterschiedlichen perspektivischen und schematischen Darstellungen jeweils eine Gesamtansicht einer Arretiereinrichtung und im unteren Teil der Figur eine schematische Seitenansicht eines erfindungsgemäßen Fahrzeugsitzes.
Figuren 2 bis 4 zeigen schematisch perspektivische Darstellungen eines Sitzteilrahmens für einen erfindungsgemäßen Fahrzeugsitz mit einer angebrachten erfindungsgemäßen Verstell- und Arretiereinrichtung.
Figur 5 zeigen schematisch eine Explosionsdarstellung der Arretiereinrichtung.
Figuren 6 bis 8 bzw. 9 bis 11 zeigen schematisch jeweils in einer Seitenansicht sowie zweier Schnittdarstellungen die Arretiereinrichtung mit Aktuator im ersten Einstellzustand bzw. im zweiten Einstellzustand der Arretiereinrichtung.
Figur 12 zeigt schematisch eine teilweise aufgeschnittene bzw. teilweise transparent dargestellte Abbildung der Arretiereinrichtung.
Figur 13 zeigt schematisch eine erfindungsgemäße Ausführungsform der Anbindung der Arretiereinrichtung bzw. einer Verstelleinrichtung an einem Sitzseitenteil, insbesondere zusammen mit einem Lenker zur Sitzhöhen- und/oder - neigungsverstellung.

### Ausführungsformen der Erfindung

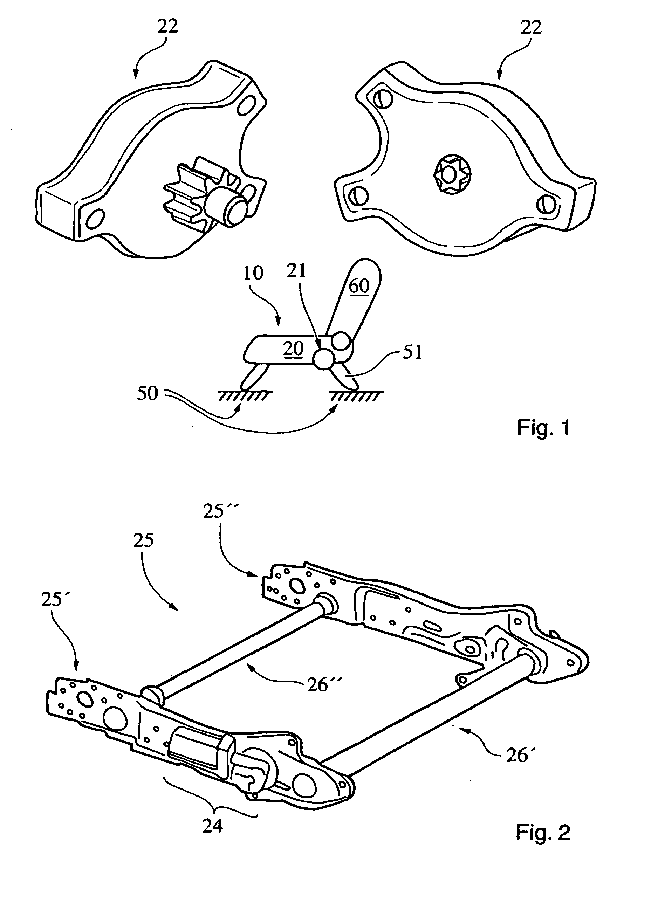

In Figur 1 ist im unteren Teil der Figur ein erfindungsgemäßer Fahrzeugsitz 10 dargestellt. Der Fahrzeugsitz 10 weist eine Sitzteilstruktur 20, eine Rückenlehnenstruktur 60 und einen Sitzunterbau 50 auf. Eine Verstell- und Arretiervorrichtung 21 zur Verstellung und zur Arretierung der Sitzhöhen- und /oder Sitzneigungsverstellung der Sitzteilstruktur 20 relativ zu dem Sitzunterbau 50 ist angedeutet. In einer ersten normalen Betriebssituation ist es vorgesehen, dass die Sitzhöhe und/oder die Sitzneigung des Fahrzeugsitzes 10 von einem Benutzer des Fahrzeugsitzes nicht verändert wird. In einer zweiten Betriebssituation kann die Sitzhöhe und/oder die Sitzneigung des Fahrzeugsitzes 10 von einem Benutzer des Fahrzeugsitzes verändert werden.

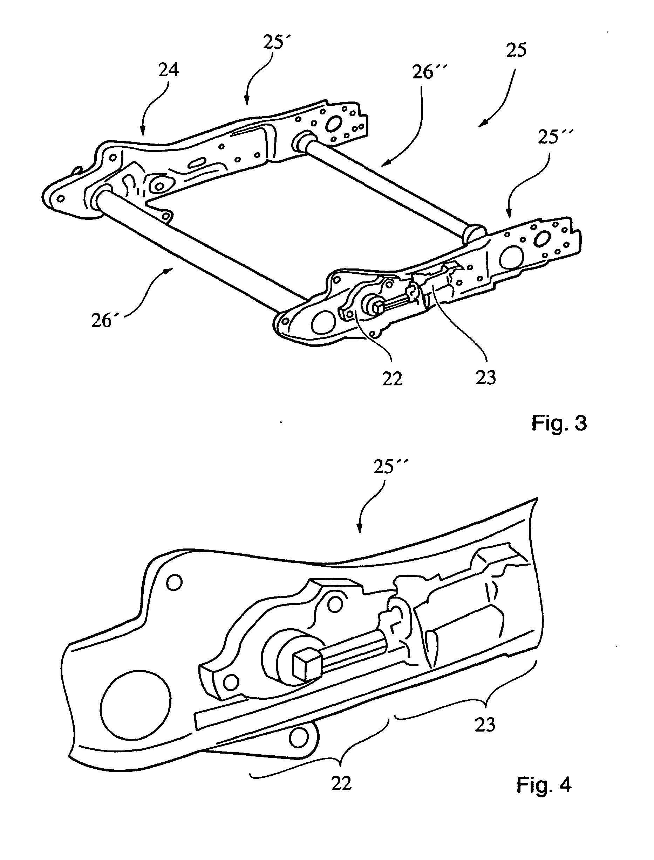

In den Figuren 2 und 3 sind schematisch zwei verschiedene perspektivische Darstellungen eines Sitzteilrahmens 25 eines erfindungsgemäßen Fahrzeugsitzes bzw. einer Sitzteilstruktur 20 dargestellt. Der Sitzteilrahmen 25 weist die Verstell- und Arretiervorrichtung 21 auf. Die Verstell- und Arretiervorrichtung 21 weist eine Arretiereinrichtung 22, einen Aktuator 23 und eine Verstelleinrichtung 24 auf.

Bei der Verstelleinrichtung 24 handelt es sich beispielsweise um eine motorisch angetriebene Verstelleinrichtung 24 oder aber auch um eine manuell betätigte Verstelleinrichtung 24, wobei es sich im Fall der manuell betätigten Verstelleinrichtung 24 insbesondere eine mittels einer kontinuierlichen Drehverstellung oder aber mittels einer Pumpbewegung betätigbare Verstelleinrichtung 24 handelt. Alternativ dazu, dass die Verstell- und Arretiervorrichtung 21 eine Verstelleinrichtung 24 aufweist, kann die Verstell- und Arretiervorrichtung 21 auch ohne die Verstelleinrichtung 24 ausgebildet sein, wobei in diesem Fall die Verstellung der Verstell- und Arretiervorrichtung 21 durch die Wirkung des Körpergewichts des Sitzinsassen erfolgt.

Der Sitzteilrahmen 25 ist insbesondere derart ausgebildet, dass auf beiden Seiten des beispielsweise in Fahrzeuglängsrichtung ausgerichteten Fahrzeugsitzteils ein erstes Sitzseitenteil 25' und ein zweites Sitzseitenteil 25" angeordnet ist. Die beiden Sitzseitenteile 25', 25" sind im dargestellten Ausführungsbeispiel mittels zweier rohrartiger Elemente 26', 26" beispielsweise zur Aufnahme von quer zu den Sitzseitenteilen 25', 25" verlaufenden Kräften miteinander verbunden.

Die Arretiereinrichtung 22 ist zusammen mit dem Aktuator 23 in vergrößerter Darstellung auch in der Figur 4 in perspektivischer Darstellung dargestellt.

Mittels des Aktuators 23 ist es möglich, die Arretiereinrichtung 22 von dem ersten Einstellzustand (verriegelt) in den zweiten Einstellzustand (entriegelt) und umgekehrt einzustellen. Hierzu ist der Aktuator 23 insbesondere als ein Linearaktuator vorgesehen, es kann jedoch auch ein rotativ wirksamer Aktuator vorgesehen sein. Wenn die Arretiereinrichtung 22 in ihrem zweiten Einstellzustand eingestellt und so die Blockierung zwischen dem Fahrzeugsitz 10 und dem Sitzunterbau 50 aufgehoben ist, so ist eine Sitzverstellung und damit eine Verstellung der Verstell-und Arretiervorrichtung möglich, insbesondere eine Sitzhöheneinstellung und/oder eine Sitzneigungseinstellung.

Wie in Figur 1 dargestellt, weist die als Ganzes nicht dargestellte Verstellvorrichtung zur Veränderung der Sitzhöhe und/oder der Sitzneigung des Fahrzeugsitzes 10 beispielsweise wenigstens einen Lenker 51 auf, der beispielsweise zur Durchführung der Höhen- und / oder Neigungsverstellung relativ zum Sitzunterbau 50 und /oder relativ zur Sitzteilstruktur 20 schwenkbar vorgesehen ist. Es ist einem Fachmann klar, dass eine solche Verstellvorrichtung außer dem Lenker 51 noch weitere Lenker (insbesondere insgesamt vier Lenker) aufweisen kann. Die erfindungsgemäße Verstell- und Arretiervorrichtung 21 ist nun beispielsweise derart angeordnet, dass an dem der Fahrzeugmitte näherliegenden zweiten Sitzseitenteil 25" die Arretiereinrichtung 22 und der Aktuator 23 angeordnet ist und dass an dem der Fahrzeugmitte abgewandten ersten Sitzseitenteil 25' die Verstelleinrichtung 24 angeordnet ist. Erfindungsgemäß kann es vorteilhaft vorgesehen sein, dass zumindest eines der rohrartigen Elemente 26', 26" derart ausgebildet ist, dass drehfest mit dem rohrartigen Element 26', 26" sowohl auf der Seite der Verstelleinrichtung 24 (d.h. insbesondere an dem der Fahrzeugmitte abgewandten ersten Sitzseitenteil 25') als auch auf der Seite der Arretiereinrichtung 22 und des Aktuators 23 (d.h. insbesondere an dem der Fahrzeugmitte näherliegenden zweiten Sitzseitenteil 25") ein eine Verzahnung aufweisender Lenker 51 angeordnet ist, so dass der Antrieb der Anordnung aus Lenkern 51 und rohrartigem Element 26', 26" mittels der auf der einen Sitzseite angeordneten Verstelleinrichtung 24 und die Arretierung der Anordnung aus Lenkern 51 und rohrartigem Element 26', 26" mittels der auf der einen Sitzseite angeordneten Arretiereinrichtung 22 erfolgt. Die Arretiereinrichtung 22 ist erfindungsgemäß insbesondere an derjenigen Sitzseite angeordnet, an welcher ein Gurtschloss zur Befestigung eines Sicherheitsgurtes angeordnet ist.

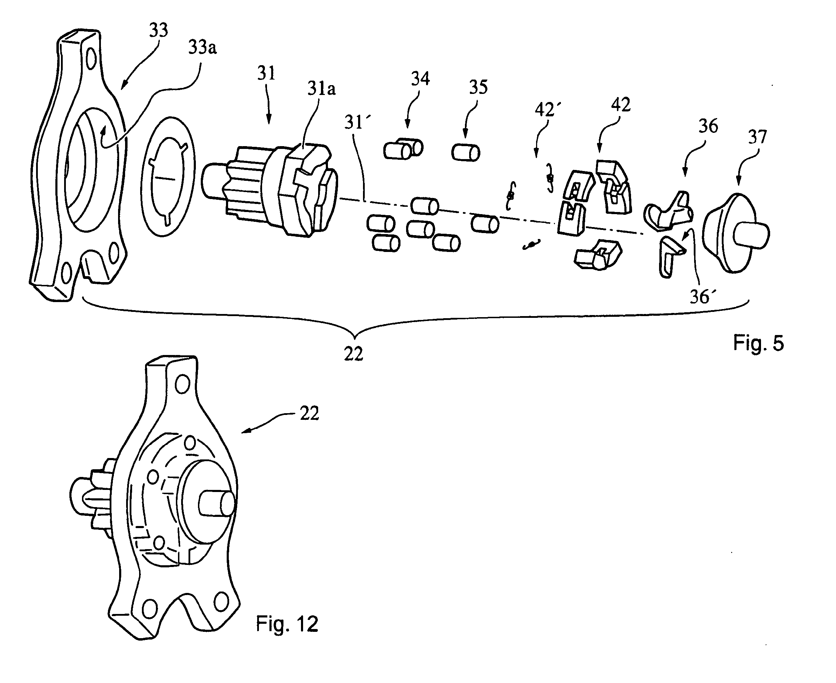

In der Figur 5 ist schematisch eine Explosionsdarstellung der Arretiereinrichtung 22 dargestellt. Die Arretiereinrichtung 22 umfasst ein erstes Drehelement 31. Die Verbindung zwischen dem ersten Drehelement 31 und der Verstell- und Arretiervorrichtung 21 ist insbesondere derart vorgesehen, dass ohne eine Drehung des ersten Drehelements 31 (d.h. bei einer Blockierung der Arretiereinrichtung 22) um die Drehachse 31' keine Bewegung möglich ist. Die Arretiereinrichtung 22 umfasst ferner einen Bremsring 33. Das erste Drehelement 31 stellt eine erste Bremsfläche 31a (radial innenliegend, jedoch nach außen gewandt) zur Verfügung und der Bremsring 33 stellt eine zweite Bremsfläche 33a (radial außenliegend, jedoch nach innen gewandt) zur Verfügung. Zwischen der ersten und zweiten Bremsfläche 31 a, 33a sind Bremselemente 34 insbesondere in Form von Bremskeilen 34 vorgesehen, die aufgrund ihrer außenliegenden (d.h. der zweiten Bremsfläche 33a zugewandten) und/oder aufgrund ihrer innenliegenden (d.h. der ersten Bremsfläche 31 a zugewandten) Kontur sowie aufgrund der Wirkung von umfangsmäßig nach außen (d.h. zur zweiten Bremsfläche 33a hin) drückenden Bremsfedern 35 im Normalfall (d.h. in der ersten Betriebssituation) eine Arretierung bzw. eine Blockierung des ersten Drehelements 31 gegenüber dem Bremsring 33 bewirken. Im Normalfall sind daher die Bremselemente 34 in einer Blockierstellung eingestellt. In dieser Blockierstellung bleiben die Bremselemente 34, solange Entriegelungselemente 36 in eine radial innenliegende Position eingestellt sind. Die Bremselemente 34 sind insbesondere als Bremsrollen vorgesehen, d.h. sie weisen im wesentlichen eine zylindrische Form auf. Aufgrund der Formgebung der ersten und zweiten Bremsfläche 31 a, 33a, insbesondere mittels eines zumindest abschnittsweise keilförmigen Verlaufs des Abstandes zwischen der ersten und zweiten Bremsfläche 31 a, 33a (entlang einer Umfangsrichtung zwischen den Bremsflächen), ist es möglich, dass die Bremselemente 34 in Blockierpositionen bzw. Blockierstellungen gelangen, so dass eine weitere Relativdrehung zwischen Bremsring 33 und erstem Drehelement 31 blockiert wird. Die Entriegelungselemente 36 sind beispielsweise als radial verschiebliche Elemente (bzw. als eine Mehrzahl von solchen Stiften) vorgesehen, die eine Schrägfläche 36' derart aufweisen, dass die Entriegelungselemente 36 mit einer konischen Fläche eines Betätigungselements 37 zusammenwirken. Die Formgebung der Entriegelungselemente 36 ist an ihrem radial äußeren Ende derart vorgesehen, dass eine Übertragung der (radialen) Bewegung auf ein Übertragungselement 42 bzw. auf eine Mehrzahl von Übertragungselementen 42 erfolgen kann. Diese bewirken eine Verschiebung der Bremselemente 34 aus ihrer Blockierposition (in der sie aufgrund der Wirkung der Bremsfeder 35 in der ersten Betriebssituation eingestellt sind) in ihre Deblockierposition, in der die Bremsfeder 35 zusammengedrückt ist. Umgekehrt werden die Übertragungselemente 42 mittels Rückstellfedern 42' wieder zusammengezogen, wenn sich die Entriegelungselemente 36 in radialer Richtung nach innen bewegen, d.h. wenn wieder der verriegelte Zustand der Arretiereinrichtung 22 eingenommen werden soll.

Figur 12 zeigt die Arretiereinrichtung 22 in ihrer zusammengebauten Form, wobei die Arretiereinrichtung 22 teilweise aufgeschnitten bzw. teilweise transparent dargestellt ist.

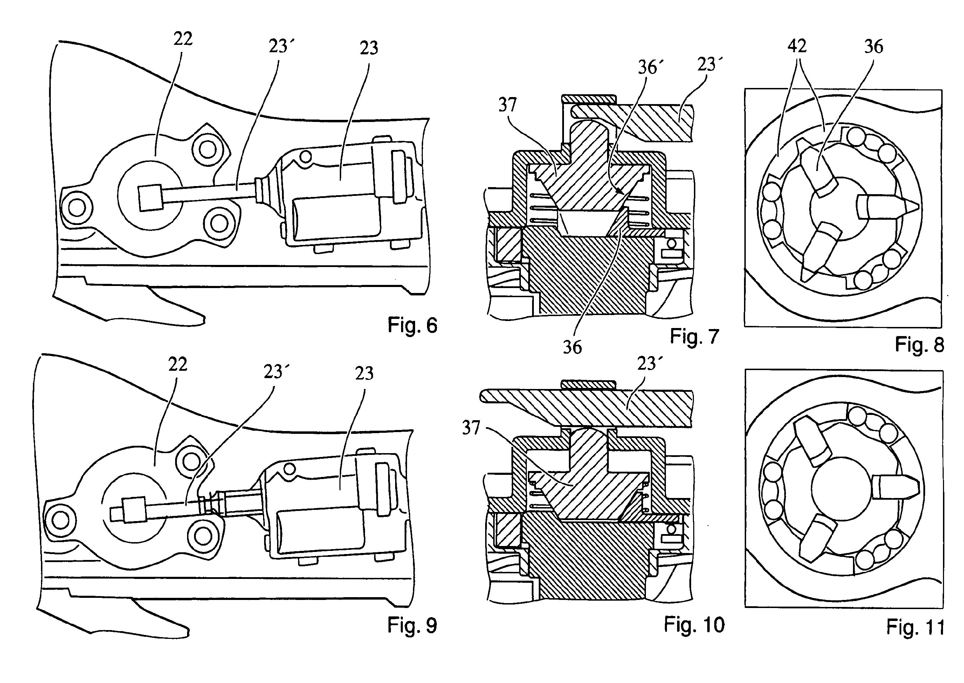

In den Figuren 6 bis 8 bzw. 9 bis 11 sind schematisch jeweils in einer Seitenansicht sowie zweier Schnittdarstellungen die Arretiereinrichtung 22 mit Aktuator 23 im ersten Einstellzustand bzw. im zweiten Einstellzustand der Arretiereinrichtung 22 dargestellt. Hierbei zeigen die Figuren 6 und 9 die Seitenansichten; Figur 6 im ersten Einstellzustand und Figur 9 im zweiten Einstellzustand der Arretiereinrichtung 22. Weiterhin zeigen die Figuren 7 und 10 jeweils eine Schnittdarstellung der Arretiereinrichtung 22 (und eines Teils eines Übertragungselements 23' des Aktuators 23 entlang der Drehachse 31 figur 7 im ersten Einstellzustand und Figur 10 im zweiten Einstellzustand der Arretiereinrichtung 22. Weiterhin zeigen die Figuren 8 und 11 jeweils eine Schnittdarstellung der Arretiereinrichtung 22 entlang einer Schnittebene im Bereich der ersten Bremsfläche 31 a und der zweiten Bremsfläche 33a; Figur 8 im ersten Einstellzustand und Figur 11 im zweiten Einstellzustand der Arretiereinrichtung 22. Das Übertragungselement 23' weist an seinem der Arretiereinrichtung 22 zugewandten Ende eine weitere Schrägfläche auf, die insbesondere mit dem Betätigungselement 37 der Arretiereinrichtung 22 derart wirkverbunden ist, dass ein Ausfahren des Aktuators 23 (und damit auch des Übertragungselements 23') vermittels der weiteren Schrägfläche des Übertragungselements 23' zu einer axialen Verschiebung des Betätigungselements 37 und damit zu einer Betätigung (im Sinne einer Entriegelung) der Arretiereinrichtung 22 führt. Bei der Bewegung des Aktuators 23 bzw. des Übertragungselements 23' in die entgegengesetzte Richtung (d.h. in den Figuren 6, 7, 9 und 10 nach rechts) wird die weitere Schrägfläche zurückgezogen und das Betätigungselement 37 kann wieder in seine der Verriegelung der Arretiereinrichtung 22 entsprechenden Einstellung überführt werden, wobei diese Bewegung des Betätigungselements 37 insbesondere mittels einer Feder, beispielsweise einer Kompressionsfeder, erfolgt, die das Betätigungselement 37 in diejenige Lage vorspannt, die der verriegelten Arretiereinrichtung 22 entspricht.

Alternative Ausführungsformen der Arretiereinrichtung 22 gehen auch aus der deutschen Patentanmeldung DE 10 2008 052 892 hervor, die mittels Bezugnahme in den Offenbarungsgehalt der vorliegenden Patentanmeldung aufgenommen werden.

Die Verstellung der Sitzhöhe und/oder der Sitzneigung erfolgt mit der erfindungsgemäßen Verstell- und Arretiervorrichtung 21 folgendermaßen: Vorausgesetzt sei, dass die Verstell- und Arretiervorrichtung 21 in ihrer ersten Betriebssituation eingestellt ist, d.h. die Arretiereinrichtung 22 ist in ihrem ersten Einstellzustand eingestellt (verriegelt). Wenn nun ein Benutzer eine andere Sitzhöhen- und/oder Sitzneigungseinstellung einzunehmen wünscht, so wird dies mittels der Verstelleinrichtung 24 bewerkstelligt. Bevor die Verstelleinrichtung 24 die Verstellung der Verstell- und Arretiervorrichtung 21 bewirkt, wird zunächst die Entriegelung der Arretiereinrichtung 22 vorgenommen. Hierzu wird - beispielsweise mittels Betätigung eines Mikroschalters - ein Schaltbefehl an den Aktuator 23 geleitet, der die Arretiereinrichtung 22 von ihrem ersten Einstellzustand in ihren zweiten Einstellzustand bewegt. Anschließend erfolgt die Änderung der Sitzhöheneinstellung bzw. der Sitzneigungseinstellung. Nach der Beendigung der Einstellungsänderung durch die Verstelleinrichtung 24 wird mittels eines weiteren Schaltbefehls an den Aktuator 23 dieser angewiesen die Arretiereinrichtung 22 wieder von ihrem zweiten Einstellzustand in ihren ersten Einstellzustand zurückzustellen.

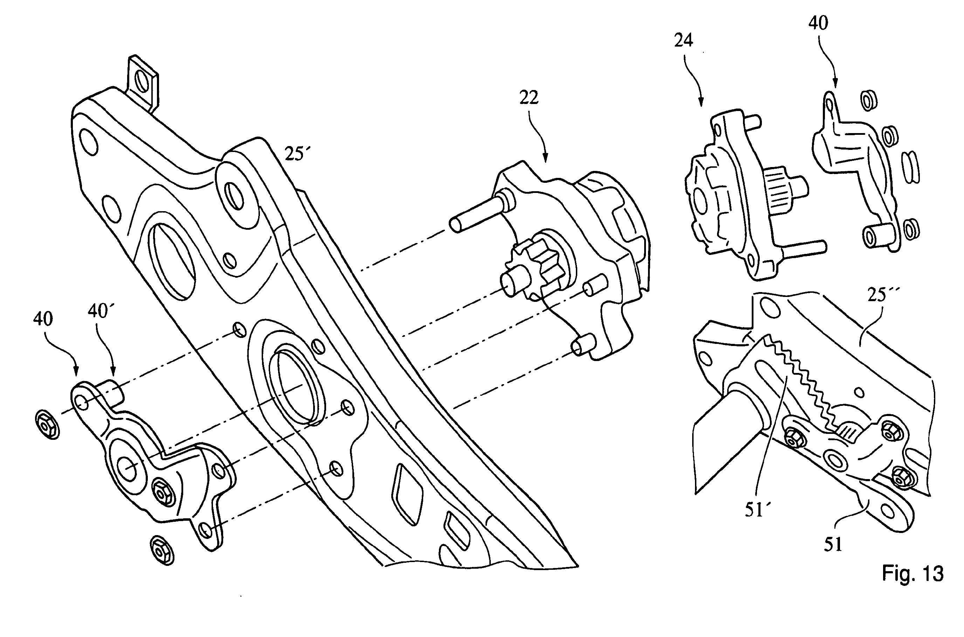

In Figur 13 ist schematisch eine erfindungsgemäße Ausführungsform der Anbindung der Arretiereinrichtung 22 bzw. der Verstelleinrichtung 24 an dem Sitzseitenteil 25', 25" (bzw. der Arretiereinrichtung 22 an dem zweiten Sitzseitenteil 25" und der Verstelleinrichtung 24 an dem ersten Sitzseitenteil 25') dargestellt. Der Lenker 51 ist hierbei insbesondere verzahnt vorgesehen, wobei die Verzahnung des Lenkers 51 mit einer entsprechenden weiteren Verzahnung der Arretiereinrichtung 22 bzw. der Verstelleinrichtung 24 kämmt und damit verbunden ist. Hierbei ist erkennbar, dass mittels einer Halteklammer 40 in besonders einfacher Weise eine hochfeste bzw. insbesondere auch mit Blick auf Unfallbelastungen sehr stabile Anbindung zwischen den Verzahnungen (von Lenker 51 einerseits und Verstelleinrichtung 24 bzw. Arretiereinrichtung 22 andererseits) realisierbar ist. Zur Verstärkung dieser Verbindung ist es insbesondere vorgesehen, dass der Lenker 51 eine Kulisse 51' derart aufweist, dass ein Befestigungsabschnitt 40' der Halteklammer 40 in der Kulisse 51' verläuft.

### Bezugszeichenliste

- 10: Fahrzeugsitz
- 20: Sitzteilstruktur
- 20: Sitzteilstruktur
- 21: Verstell- und Arretiervorrichtung
- 22: Arretiereinrichtung
- 23: Aktuator
- 23': Übertragungselements
- 24: Verstelleinrichtung
- 25: Sitzteilrahmen
- 25': ersten Sitzseitenteil
- 25": zweites Sitzseitenteil
- 26', 26": rohrartige Elemente
- 31: erstes Drehelement
- 31': Drehachse
- 31 a: erste Bremsfläche
- 33: Bremsring
- 33a: zweite Bremsfläche
- 34: Bremselemente
- 35: Bremsfedern
- 36: Entriegelungselemente
- 36': Schrägfläche
- 37: Betätigungselement
- 40: Halteklammer
- 40': Befestigungsabschnitt
- 42: Übertragungselement
- 50: Sitzunterbau
- 51: Lenker
- 51': Kulisse
- 60: Rückenlehnenstruktur

## Patentansprüche

1. Verstell- und Arretiervorrichtung (21), insbesondere für einen Sitzhöhenverstellmechanismus eines Fahrzeugsitzes (10), wobei die Verstell- und Arretiervorrichtung (21) eine mittels eines Aktuators (23) zur Durchführung einer Verstellung entriegelbare Arretiereinrichtung (22) und eine Verstelleinrichtung (24) aufweist, wobei die Arretiereinrichtung (22) in einer ersten Betriebssituation, in der keine Verstellung der Verstell- und Arretiervorrichtung (21) vorgesehen ist, arretiert und zur Aufnahme von unfallbedingten Kräften vorgesehen ist, wobei die Arretiereinrichtung (22) in einer zweiten Betriebssituation, in der eine Verstellung der Verstell- und Arretiervorrichtung (21) vorgesehen ist, entriegelt vorgesehen ist, wobei die Arretiereinrichtung (22) einen Bremsring (33) und einen in der zweiten Betriebssituation relativ zum Bremsring (33) um eine Drehachse (31') drehbaren ersten Drehelement (31) aufweist, wobei die Arretiereinrichtung (22) ein Entriegelungselement (36) und ein Betätigungselement (37) aufweist, und beim Übergang von der ersten Betriebssituation zur zweiten Betriebssituation eine Bewegung des Entriegelungselements (36) relativ zur Drehachse (31') im Wesentlichen radial nach außen und eine Bewegung des Betätigungselements (37) relativ zur Drehachse (31') im Wesentlichen axial vorgesehen ist, **dadurch gekennzeichnet, dass** die Arretiereinrichtung (22) mittels eines Aktuators (23) motorisch von der ersten Betriebssituation in die zweite Betriebssituation bringbar ist, wobei die Entriegelung der Verstell- und Arretiervorrichtung (21) einerseits und die Verstellung der Verstell- und Arretiervorrichtung (21) andererseits entkoppelt ist.

2. Verstell- und Arretiervorrichtung (21) nach Anspruch 1, **dadurch gekennzeichnet, dass** das Entriegelungselement (36) und das Betätigungselement (37) zum Zusammenwirken mittels einer Schrägfläche (36') vorgesehen sind.

3. Verstell- und Arretiervorrichtung (21) nach einem der vorhergehenden Ansprüche, **dadurch gekennzeichnet, dass** die Arretiervorrichtung (30) wenigstens ein Bremselement (34) aufweist, wobei in der ersten Betriebssituation das Bremselement (34) zur Blockierung einer Drehung zwischen dem Bremsring (33) und dem ersten Drehelement (31) vorgesehen ist, wobei beim Übergang von der ersten Betriebssituation zur zweiten Betriebssituation eine direkte oder indirekte Übertragung der Bewegung des Entriegelungselements (36) auf das Bremselement (34) vorgesehen ist.

4. Verstell- und Arretiervorrichtung (21) nach einem der vorhergehenden Ansprüche, **dadurch gekennzeichnet, dass** die Übertragung der Bewegung des Entriegelungselements (36) auf das Bremselement (34) direkt vorgesehen ist oder mittels eines Übertragungselements (42) vorgesehen ist.

5. Fahrzeugsitz (10) mit einer Verstell- und Arretiervorrichtung (21) nach einem der vorhergehenden Ansprüche, wobei der Fahrzeugsitz (10) durch Verstellen der Verstell- und Arretiervorrichtung (21) höhen- und oder neigungseinstellbar vorgesehen ist.

## Claims

1. Adjustment and locking device (21), in particular for a seat height adjustment mechanism of a vehicle seat (10), wherein the adjustment and locking device (21) has a locking mechanism (22), which is releasable by means of an actuator (23) for carrying out an adjustment, and an adjustment mechanism (24), wherein the locking mechanism (22) is locked in a first operating situation in which no adjustment of the adjustment and locking device (21) provided and is intended for an absorption of accident-related forces, wherein the locking mechanism (22) is released in a second operating situation, in which adjustment of the adjustment and locking device (21) is provided, wherein the locking mechanism (22) has a brake ring (33) and a first rotary element (31) which is rotatable about an axis of rotation (31') relative to the brake ring (33) in the second operating situation, wherein the locking mechanism (22) has a release element (36) and an actuating element (37) and, on transition from the first operating situation to the second operation, a movement of the release element (36) relative to the axis of rotation (31') essentially radially outwards and a movement of the actuating element (37) relative to the axis of rotation (31') essentially axially is provided, **characterised in that** the locking mechanism (22) can be brought from the first operating situation into the second operating situation by means of a motor driven actuator (23), wherein the release of the adjustment and locking device (21) on the one hand and the adjustment of the adjustment and locking device (21) on the other is decoupled.

2. Adjustment and locking device (21) in accordance with claim 1, **characterised in that** the release element (36) and the actuating element (37) are provided for interaction by means of an inclined plane (36').

3. Adjustment and locking device (21) in accordance with one of the preceding claims, **characterised in that** the locking device (30) has at least one braking element (34), wherein, in the first operating situation, the braking element (34) is intended to inhibit a rotation between the brake ring (33) and the first rotary element (31) wherein, on transition from the first operating situation to the second operating situation, a direct or indirect transfer of the movement of the release element (36) to the brake element (34) is provided.

4. Adjustment and locking device (21) in accordance with one of the preceding claims, **characterised in that** the transfer of the movement of the release element (36) to the brake element (34) is provided directly or by means of a transfer element (42).

5. Vehicle seat (10) with an adjustment and locking device (21) in accordance with one of the preceding claims, wherein adjustment of the height and or inclination of the vehicle seat (10) is provided by means of the adjustment and locking device (21).

## Revendications

1. Le dispositif de réglage et de verrouillage (21), en particulier pour le réglage mécanique d'un siège en hauteur d'assise pour un véhicule (10) , où le dispositif de réglage et de verrouillage (21) au moyen d'un actionneur (23) effectue un ajustement du moyen de verrouillage libérable (22) et un dispositif de réglage (24), où le dispositif de verrouillage (22) est dans une première situation de fonctionnement, dans laquelle aucun réglage du dispositif de réglage et de verrouillage (21), n'est bloqué en place et est destiné à contenir les forces accidentelles, et les moyens de verrouillage (22) dans une seconde situation de fonctionnement, où un ajustement du dispositif de réglage et de verrouillage (21) est prévu pour être libéré , où les moyens de verrouillage (22) comportent un anneau de freinage (33) et dans la seconde position de fonctionnement par rapport à la bague de freinage (33) autour d'un axe de rotation (31') qui fait tourner le premier élément rotatif (31), où les moyens de verrouillage (22) comprennent un élément de libération (36) et un élément d'actionnement (37), et le passage de la première à la deuxième position de fonctionnement d'un déplacement de l'élément de déverrouillage (36) par rapport à l'axe de rotation (31') et par rapport à l'axe de rotation (31 radialement au mouvement vers l'extérieur de l'élément d'actionnement (37)') ce qui est prévu pour l'axialement essentiel, qui est **caractérisé en ce que** le dispositif de verrouillage (22) au moyen d'un actionneur (23) motorisé par la première situation de fonctionnement et la deuxième situation de fonctionnement est mis en prise, où le déverrouillage du dispositif de réglage et de verrouillage (21) d'une part et le réglage du dispositif de réglage et de verrouillage (21), d'autre part, est découplé.

2. Le dispositif de réglage et de verrouillage (21) selon la revendication 1, **caractérisé en ce que** l'élément de déverrouillage (36) et l'élément d'actionnement (37) coopèrent au moyen d'une surface inclinée (36 ') .

3. Le dispositif de réglage et de verrouillage (21) selon l'une quelconque des revendications précédentes, est **caractérisé en ce que** le dispositif de verrouillage (30) comporte au moins un élément de freinage (34), où dans la première position de fonctionnement, l'élément de freinage (34) pour bloquer la rotation entre la bague de freinage (33) et le premier élément rotatif (31) est prévu, étant prévu à la transition entre le premier état de fonctionnement et le deuxième état de fonctionnement et comporte un transfert direct ou indirect du mouvement de l'élément de libération (36) sur l'élément de freinage (34).

4. Le dispositif de réglage et de verrouillage (21) selon l'une quelconque des revendications précédentes, est **caractérisé par le fait que** la transmission du mouvement de l'élément de libération (36) sur l'élément de freinage (34) est prévue directement ou par l'intermédiaire d'un élément de transmission (42).

5. Le Siège du véhicule (10) ayant un ajustement et un dispositif de verrouillage (21) selon l'une quelconque des revendications précédentes, où le siège du véhicule (10) prévoit un ajustement du dispositif de réglage et de verrouillage (21) de hauteur et d'inclinaison.
